# EUROPEAN PATENT SPECIFICATION

(11) **EP 2 257 096 B1**
(45) Date of publication and mention of the grant of the patent: **14.03.2018**
(21) Application number: 09161394.3
(22) Date of filing: 28.05.2009
(51) Int. Cl.: H04W 12/06, H04L 29/06

(54) **Method, system, server and computer program for services**
Verfahren, System, Server und Computerprogramm für Dienstleistungen
Procédé, système, serveur et programme informatique pour des services

(43) Date of publication of application: 01.12.2010
(73) Proprietor: Telia Company AB, 169 94 Solna (SE)
(72) Inventor: Keisala, Ilkka, 02710 Espoo (FI)
(74) Representative: Kolster Oy Ab

(56) References cited:
- EP-A1- 1 650 999
- US-A1- 2006 004 643

## Description

### Field

The invention relates to a method, system, gateway server and computer program for services.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Nowadays a plenty of services are available via a web, such as the Internet. Technical development has extended possibilities to purchase services and goods despite of their location. On the Internet, the supply of web shops is large in quantity as well as in scope.

US 2006/0004643 discloses a method and system for recording and billing of services during roaming of a mobile IP node in heterogeneous WLAN. wherein authentication and/or service authorization of the mobile IP node is carried out at an HLR and/or VLR of a GSM network, based on the MSI of the SIM card of the Mobile node.

EP 1 850 999 discloses user authorization for services in a wireless communications network decoupling the service authorization function from the tunnel establishment providing separate authorization and establishment of a communication path for service access.

### Brief description

According to an aspect of the present invention, there is provided a method comprising: carrying out authentication based on a user identity module for defining a user identification by an authentication server and a home location register; checking information on user's entitlement to services based on the user identification by an authorization server; if the user is entitled to secured connection services, establishing a secured connection session between a user device and a gateway server by the gateway server; receiving a payment message from a service server, forwarding the payment message to the user, and receiving a message comprising user's acceptance of a payment transaction by the gateway server; adding the user identification to the secured connection or the message comprising the user's acceptance of a payment transaction, and conveying the user's acceptance of the payment transaction to the service server by the gateway server; and securing the payment transaction by using the user identification by the service server or the Gateway servers.

According to another aspect of the present invention, there is provided a system, comprising: an authentication server configured to carry out authentication based on a user identity module for defining a user identification; an authorization server configured to check information on user's entitlement to services based on the user identification; a gateway server configured to establish a secured connection, receive a payment message from a service server, forward the payment message to the user, receive a message comprising user's acceptance of a payment transaction, convey the user's acceptance of the payment to the service server, and add the user identification to the secured connection or the message comprising the user's acceptance of a payment transaction; and a service server configured to secure a payment transaction by using the user identification.

According to another aspect of the present invention, there is provided a gateway server, comprising: means for establishing a secured connection; means for receiving a payment message from a service server; means for forwarding the payment message to the user; means for receiving a message comprising user's acceptance of a payment transaction; means for adding a predetermined user identification to the secured connection or the message comprising the user's acceptance of a payment transaction; and means for conveying the user's acceptance of the payment transaction to the service server.

### List of drawings

Embodiments of the present invention are described below, by way of example only, with reference to the accompanying drawings, in which
Figure 1 illustrates an example of a communication system;
Figure 2 is a flow chart; and
Figure 3 illustrates an example of a gateway server.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments are applicable to any server, node or host, corresponding component, and/or to any communication system or any combination of different communication systems that support required functionality.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

In the following, different embodiments will be described using, as an example of a system architecture whereto the embodiments may be applied, an architecture based on a system able to provide a secured connection, such as a Virtual Private Network (VPN) tunnel for packet transmission, such as an Internet Key Exchange protocol version 2 (IKEv2) Internet Protocol Security (IPSec) VPN tunnel.

Many different radio protocols to be used in communications systems for establishing a wireless connection exist. Some examples of different communication systems include Global System for Mobile Communications (GSM), the Universal Mobile Telecommunications System (UMTS) radio access network (UTRAN or E-UTRAN), Long Term Evolution (LTE, the same as E-UTRA), Wireless Local Area Network (WLAN), Worldwide Interoperability for Microwave Access (WiMAX), Bluetooth®, Personal Communications Services (PCS) and systems using ultra-wideband (UWB) technology.

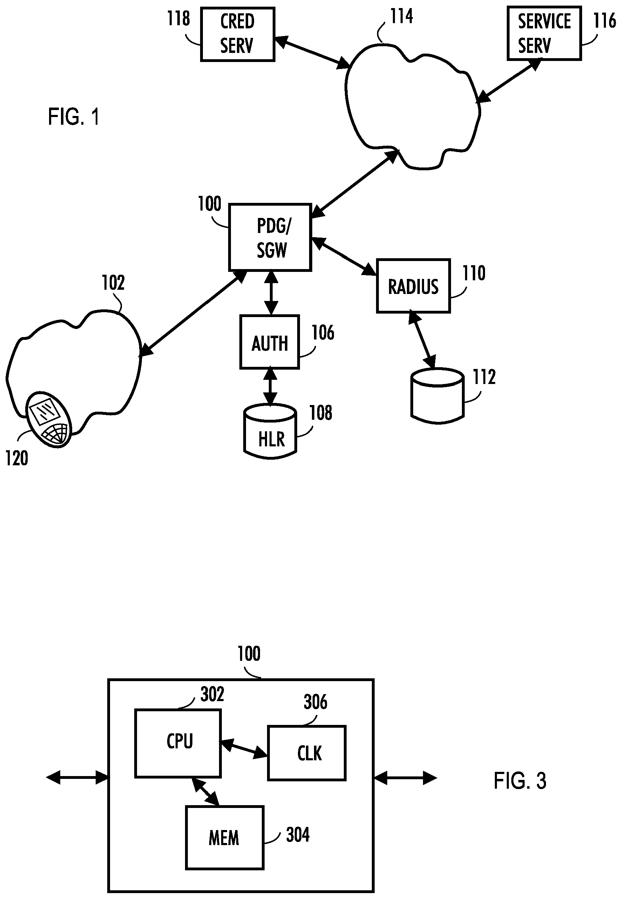

Figure 1 is a simplified system architecture only showing some elements and functional entities, all being logical units whose implementation may differ from what is shown. The connections shown in Figure 1 depict logical connections; the actual physical connections may be different. It is apparent to a person skilled in the art that the systems also comprise other functions and structures.

Figure 1 shows a part of an example of architecture for communication over a web, such as the Internet. The radio system providing connections over a radio path is not described, since radio protocols used are not relevant regarding embodiments of the invention.

Embodiments are not, however, restricted to the system given as an example but a person skilled in the art may apply the solution to other communication systems provided with the necessary properties.

The system is first explained only shortly.

A communications system operator maintains a gateway server 100, such as a Packet Data Gateway (PDG) or a signalling gateway (SGW). The Packet Data Gateway acts as gateway of a secured connection, such as a Virtual Private Network (VPN) gateway. The Virtual Private Network (VPN) is a computer-based network in which selected connections between nodes are carried out by virtual circuits which thus perform a part of a larger network, such as the Internet. The link-layer protocols of the virtual network are usually tunnelled via the larger network. VPNs may be used to separate traffic of different user communities over an underlying network.

The operator also maintains an authentication server, such as an Extensible Authentication Protocol Subscriber Identity Module (EAP-SIM) server or Authentication and Key Agreement (EAP-AKA) 106. EAP is a universal authentication framework mostly used in wireless networks and Point-to-Point connections. EAP-SIM is a protocol mechanism designed for authentication and session key distribution using a Subscriber Identity Module (SIM), and EAP-AKA is a mechanism for authentication and session key distribution using for example a Universal Subscriber Identity Module (USIM). A Universal Integrated Circuit Card (UICC) may be an implementation of SIM or USIM. An UICC is a smart card used in mobile terminals in GSM and UMTS networks. The UICC ensures the integrity and security of personal data.

In a GSM network, the UICC contains a SIM application and in a UMTS network it contains a USIM application. A UICC may contain several applications, making it possible for the same smart card to give access to both GSM and UMTS networks.

A home Location Register (HLR) 108 may also be available. HLR is a database containing information on subscribers. Home Location Register typically stores subscriber information permanently.

An authorization server 110 may be a Remote Authentication Dial In User Service (RADIUS) server or a Diameter which is a networking protocol for AAA (Authentication, Authorization and Accounting). A Diameter is a successor to RADIUS. Typically, the authorization server is a remote authentication dial-in user service server.

RADIUS is a networking protocol using access servers to provide centralized management of access to large networks. RADIUS is commonly used in connection with the Internet or internal networks employing a variety of networking technologies, including modems and Virtual Private Networks.

A user may use user device 120 which is operationally coupled to the Internet (or corresponding network) 102 via a Wireless Local Area Network (WLAN) which is also known in a commercial name Wi-Fi when used for the Internet. Other corresponding networks include Broadband 450 and Worldwide Interoperability for Microwave Access (WiMAX) or similar access types enabling connection to the Internet. The Internet is an example of an unsecured network.

The user device may refer to portable computing devices. Such computing devices include wireless mobile communication devices including, but not limited to, the following types of devices: a mobile phone, smartphone, personal digital assistant (PDA), handset, multimedia device, game console, laptop (a notebook), etc.

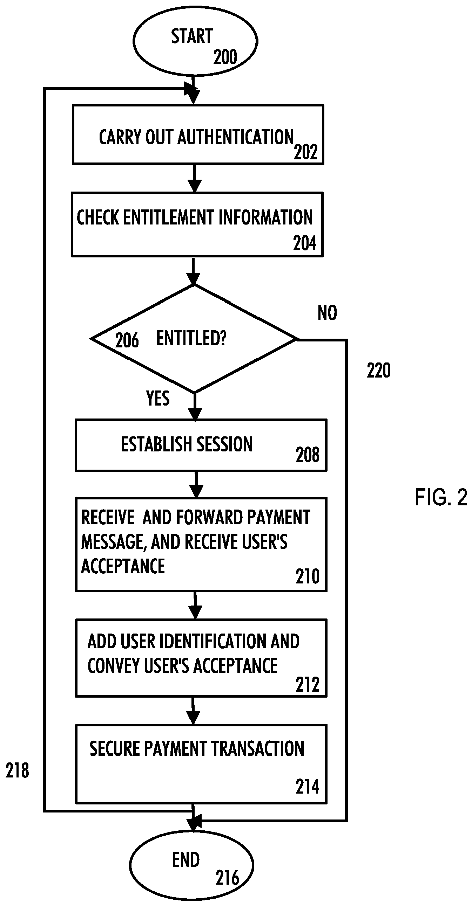

An embodiment of the invention will now be explained in further detail by means of Figure 1 and Figure 2. Figure 2 is a flow chart depicting an embodiment of a method according to the invention. The method starts in block 200.

In block 202, authentication is carried out based on a user identity module for defining user identification by an authentication server and a home location register. This authentication may also be called subscriber identity module (SIM) authentication. Authentication is a process to verify a person's identity by reading it from a SIM card and to carry out the user's subscription on an operator's network. This authentication may be a typical mobile subscription authentication enabling also a secure connection between the user and the operator. A user identity module includes authentication information, such as user identification. The user identification may be stored on a subscriber identity module. Many kinds of user identity modules exist. A subscriber identity module (SIM) is one example. A SIM is typically a part of a removable smart card such as an Integrated Circuit Card. SIM cards are used in mobile devices, such as mobile computers and mobile phones. SIM cards store information for identification of a subscriber, such as an International Mobile Subscriber Identity (IMSI), Authentication Key (Ki) and Local Area Identity (LAI). The equivalent of a SIM in the UMTS is called a Universal Subscriber Identity Module (USIM), and in CDMA-based system a Removable User Identity Module (RUIM). In this application, a SIM or a subscriber identity module means all modules including identity information not depending on the communication system.

An authentication server may be an Extensible Authentication Protocol Subscriber Identity Module (EAP-SIM) server (106 in Figure 1).

In block 204, information on user's entitlement to services is checked based on the user identification by an authorization server (In Figure 1, 110). The authorization server is coupled to a database including data about services available to certain users. The entitlement information (or authorization information) may be stored also on a credit server which may be a web service maintained by a bank or a credit company and/or in a database related to the authorization server.

This process may also be called authorization. Authorization is typically carried out for ensuring that access to resources is allowed only to permitted subscribers. Resources may be files or data, computer programs, computer devices and functionality provided by computer applications. Authentication and authorisation together are sometimes called access control.

An authorization server may be a remote authentication dial-in user service (RADIUS) server (110 in Figure 1). Authorization information is typically stored in a database (112 in Figure 1).

A virtual private network session (VPN) is a computer-based network in which selected connections between nodes are carried out by virtual circuits which thus perform a part of a larger network, such as the Internet. A VPN connection is often called a VPN tunnel.

If the user is entitled to secured connection services, such as virtual private network services (block 206), a secured connection is established by a gateway server (block 208). The gateway server may be a Packet Data Gateway (PDG) or a signalling gateway (SGW). The user may thus be in connection with a service using this VPN tunnel from terminal to PDG/SGW and further to the Internet.

In block 210, a payment message is received from a service server (Figure 1, 116), forwarded to the user, and a message comprising user's acceptance of a payment transaction is received by the gateway server (Figure 1, 100).

The service server may provide a user-interactive network sales system for implementing a marketplace for goods and/or services over computer networks such as the Internet. This kind of a market place is called a web shop. This kind of a service server may be called a commercial service server.

In an embodiment, a service server sends an accepted payment message to a credit server for a security check.

The service server may construct a payment order, send it to the user, and after receiving the credit card details from a user, send the details for a security check of the purchase to another resource before accepting the payment transaction. Also a gateway server, such as an SGW, typically knows based on the service entitlement of the user that to certain traffic towards the services (typically commercial) the user identification is added (typically MSISDN). After this there are two possible ways to make the security check: first, a credit server has a connection to an SGW, and it sends the connection details (e.g. MSISDN and message identification) to the SGW to verify that these details belong together, or second, a commercial service sends credit card details together with a user identification (typically MSISDN) to the credit server, and the credit server has been informed that if this credit card is used for a payment, certain user identification (MSISDN) must be attached to the payment message. Otherwise it does not accept the payment.

In block 212, the user identification is added to the secured connection or the message comprising the user's acceptance of a payment transaction, and the user's acceptance of the payment transaction is conveyed to the service server by the gateway server.

Typically, the gateway server adds a user identification, such as a Mobile Subscriber International ISDN (Integrated Services Digital Network) Number (MSISDN) to the secured user connection. The gateway server may inform the service server about the user identification. An MSISDN consists of a country code, national destination code and subscriber number.

The gateway server usually has information on the user messages which the identification is going to be added to. In an embodiment, the user identification is added to a payment message from a user device to a service server. The gateway server receives the information on these users and services from a RADIUS. In an embodiment, a user has a UICC or Universal Serial Bus (USB) device such as a memory stick into which a SIM-card (or another user identity module) and a payment functionality such as a credit card have been integrated. The USB-device typically also includes user interface application software. When a user connects the USB-device to his user device, the application is opened for a user-interactive session. Typically, a client computer program comprising program instructions for running the service is included in the UICC or USB-SIM combination.

In block 214, the payment transaction is secured by using the user identification by the service server (Figure 1, 116). The secured connection used may be a virtual private network session (VPN). Typically, a VPN session is established between a user device and the gateway server. The service server has a connection to the user device 120 typically using a Hypertex Transfer Protocol Secure (HTTPS) protocol.

Typically, an identification of a payment means, such as a credit card number, is requested from the user or retrieved from a SIM card of the user device. A UICC or combined USB-SIM may include a credit card number as a default, but the user may also select the number of the credit card he or she enters, for instance if the user has several credit cards. The default credit card number may also be known by a server being responsible for checking credit card information, such as a credit server (see Figure 1, 118) which may be a web service maintained by a bank or credit company. The credit server may verify that the user identification (such as an MSISDN) related to a secured connection (such as a VPN session (such as IKEv2/IPSec)) is related to the credit card details and the user identification stored in the credit server.

In an embodiment, a gateway server adds the user identification such as an MSISDN of the user to an HTTPS connection request which is secured by the server at a web-shop event, such as a payment transaction. Because the SGW adds an MSISDN to the payment message, this procedure provides a possibility to prevent misuse of the MSISDN. The gateway server retrieves the MSISDN of the user after access rights of user have been authorised by a RADIUS server.

In an embodiment, the service server may also validate an accepted payment message and forward it to a credit server.

In yet another embodiment, securing may be carried out as follows: a gateway server verifies for a credit server that a user identification is related to the secured connection in question, and/or the gateway server adds the user identification to the secured connection or a message comprising the user's acceptance of a payment transaction, and conveys the message to a credit server for securing a payment transaction.

The embodiment ends in block 216. The embodiment is repeatable. One option for repetition is shown by arrow 218.

If the user is not entitled to the secured connection, such as the VPN service, the embodiment is ended (arrow 220).

In an embodiment, in the authentication to a home location register (Figure 1, 108) via an authentication server (Figure 1, 106), subscriber's MSISDN is verified. After that the user's access right to the operator's services is verified typically by a RADIUS server (Figure 1, 110). Authorisation to services such as commercial services is therefore checked. In this authorization phase, a UICC or USB-SIM combination of a user device may be used. Both the authentication phase and the authorisation to the operator's service set may be carried out separately or as one event.

The RADIUS server may inform the gateway server of the successful SIM/USIM authentication, MSISDN of the user device, services related to the MSISDN and then the gateway server may establish a VPN connection to the user device.

It should be noticed that the server operations illustrate a procedure that may be implemented in one or more physical or logical entities. The signaling messages are only exemplary and may even comprise several separate messages for transmitting the same information. In addition, the messages may also contain other information.

The steps/points, signaling messages and related functions described above in Figure 2 are in no absolute chronological order, and some of the steps/points may be performed simultaneously or in an order differing from the given one. Other functions can also be executed between the steps/points or within the steps/points and other signaling messages sent between the illustrated messages. Some of the steps/points or part of the steps/points can also be left out or replaced by a corresponding step/point or part of the step/point. The server operations illustrate a procedure that may be implemented in one or more physical or logical entities. The signaling messages are only exemplary and may even comprise several separate messages for transmitting the same information. In addition, the messages may also contain other information.

Next, a system according to an embodiment is explained in further detail. The system shown in Figure 1 is an example using as a secured connection a virtual private network (VPN session). Other secured connections are also applicable.

The system is shown in Figure 1, and discussed in relation to Figures 1 and 2. The system's functionality and system elements are described in the light of enabling a use of a service, such as a web shop. In Figure 1, the service is provided by a web shop 116 to which the user has an HTTPS connection via the Internet (or corresponding network) 114. Typically also financial services are provided by a credit server 118 which may be a web service maintained by a bank or a credit company. The credit server typically maintains information about which users have a UICC or USB-SIM combination enabling the use of a service wherein a payment transaction is secured by a service server using the user identification in connection with the virtual private network session between the gateway server and user device. Further, the gateway server is operationally coupled (the term "operationally coupled" may mean a wireless connection or a wired connection between two modules, units or apparatuses, etc. It may be internal or external. The connection may be straight or via one or more intermediate modules, units or apparatuses, etc.) to the service server by an HTTPS connection. Additionally, the credit server may also maintain information on users' entitlement to services based on the information on the existence of the UICC or USB-SIM combination.

A user 120 establishes a connection to the Internet via an unsecured network 102 such as the Wireless Local Area Network (WLAN) which is also known by a commercial name Wi-Fi when used for the Internet. Other corresponding networks include Broadband 450 and Worldwide Interoperability for Microwave Access (WiMAX) or a fixed line connection.

The system includes an authentication server 106, which in this example is an EAP-SIM server, configured to carry out authentication based on a user identity module for defining a user identification.

An authorization server 110, which in this example is a RADIUS, is configured to check information on user's entitlement to services based on the user identification. Typically, a user is only provided with services he or she has access to.

A gateway server 100, which in this example is a Packet Data Gateway (PDG) or a signalling gateway (SGW), is configured to establish a secured connection, such as a virtual private network session, receive a payment message from a service server, forward the payment message to a user, receive a message comprising the user's acceptance of a payment transaction, add the user identification to the secured connection or the message comprising the user's acceptance of a payment transaction, and convey the user's acceptance of the payment to the service server.

The gateway server may secure and/or add a user identification to an HTTPS connection request relating to its dedicated virtual private network session, and transfer the transaction to the server for further processing.

In an embodiment, a user connects to a service server for transacting business. Then, for verifying the business transaction, the service server sends a transaction message to be verified by the user. The user verifies the transaction message by adding a credit card number to it and after that sends the message back to the service server. A gateway server verifies for a credit server that the user identification is related to the secured connection in question by the gateway server.

The gateway server may verify for a credit server that the user identification is related to the secured connection in question by the gateway server, or add the user identification to the secured connection or the message comprising the user's acceptance of a payment transaction, and convey the message by the gateway server to a credit server for securing a payment transaction.

Typically, the gateway server verifies the existence of a subscriber identity module including a payment functionality and adds a user identity, such as an MSISDN to a response message and forwards it to the service server which forwards it to a credit server or the gateway server sends the message directly to the credit server which then secures that the credit card number and the MSISDN belong together. This may be based on the service set the user has retrieved by the Radius from the database 112.

The gateway server secures the message with the user identification relating to a VPN session (such as IKEv2/IPSec) in question.

Another option is that the gateway server adds the user identification to a response message of the secured connection which is intended to a credit server for securing a payment transaction by the gateway server. In this case the credit server asks the gateway server whether the MSISDN is related to the secured connection or a certain message. If it is related, the credit card server accepts the payment transaction.

In a further embodiment, a gateway server may also add the MSISDN of the user to a Hypertex Transfer Protocol Secure (HTTPS) request which is used to secure the web-shop event by a service server. This procedure provides a possibility to prevent misuse of a MSISDN.

In yet a further embodiment, the existence of a subscriber identity module including a payment functionality may also be determined by the gateway server or a credit server, and the user may be requested for a credit card number and user identification.

It should be understood that the system may also provide a router configured to route service requests to each service server by a proxy server.

Figure 3 is a block diagram of an apparatus according to an embodiment of the invention. Although the apparatus has been depicted as one entity, different modules may be implemented in one or more physical or logical entities. The apparatus of this example is a network element which may be a host or a node acting as a gateway server. The apparatus may also be a server component. It is also obvious that the apparatus may also include parts not disclosed herein.

The gateway server 100 may be implemented as an electronic digital computer, which may comprise a working memory (RAM) 304, a central processing unit (CPU) 302, and a system clock 306. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary, depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions. The gateway server is operationally coupled to a network it serves.

A gateway server may comprise means (302) for establishing a secured connection, means (302, 304) for receiving a payment message from a service server, means (302, 304) for forwarding the payment message to the user, means (302, 304) for receiving a message comprising user's acceptance of a payment transaction, means (302, 304) for adding a predetermined user identification to the secured connection or the message comprising the user's acceptance of a payment transaction, and means (302, 304) for conveying the user's acceptance of the payment transaction to the service server. The user identification (typically MSISDN) may be added to the HTTPS header or payment transaction header.

The functionality of the gateway server is further explained in connection with Figure 2.

An embodiment provides a computer program embodied on a distribution medium, comprising program instructions which, when loaded into an electronic apparatus, constitute the functionality of a gateway server described above.

The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital computer or it may be distributed amongst a number of computers.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g., procedures, functions, and so on) that perform the functions described herein. The software codes may be stored in a memory unit and executed by processors. The memory unit may be implemented within the processor or externally to the processor. In the latter case it can be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The invention and its embodiments are not limited to the examples described above but may vary within the scope of the claims.

## Claims

1. A method comprising:
carrying out (202) authentication based on a user identity module for defining a user identification by an authentication server and a home location register;
checking (204) information on user's entitlement to services based on the user identification by an authorization server;
**characterized in that**
if the user is entitled to secured connection services (206),
establishing (208) a secured connection session between a user device and a gateway server by the gateway server;
receiving (210) a payment message from a service server, forwarding the payment message to the user, and receiving a message comprising user's acceptance of a payment transaction by the gateway server;
adding (212) the user identification to a secured connection message or the message comprising the user's acceptance of a payment transaction, and conveying the user's acceptance of the payment transaction to the service server by the gateway server; and
securing (214) the payment transaction by using the user identification by the service server by means of a secure transfer protocol or by the gateway server by means of a virtual private network.

2. The method of claim 1, wherein the authentication server is an extensible authentication protocol subscriber identity module (EAP-SIM) server, the gateway server is a packet data gateway (PDG) or a signaling gateway (SGW) and/or the authorization server is a remote authentication dial-in user service server.

3. The method of claims 1 to 2, wherein the user identification is stored on a subscriber identity module and/or the user is operationally coupled to the gateway server via the secured connection session via an unsecured network.

4. The method of claims 1 to 3, wherein the user uses a universal serial bus device in which a subscriber identity module and a payment functionality have been integrated.

5. The method of claims 1 to 4, further comprising:
determining the existence of a subscriber identity module including a payment functionality by the gateway server or a credit server;
requesting the user for a credit card number and user identification.

6. The method of claims 1 to 5, further comprising in securing: verifying for a credit server that the user identification is related to the secured connection in question by the gateway server, and/or adding the user identification to the secured connection message or to the message comprising the user's acceptance of a payment transaction, and conveying the message by the gateway server to a credit server for securing a payment transaction.

7. The method of claims 1 to 6, wherein the service server is further configured to forward the accepted payment message to a credit server.

8. A computer program comprising program instructions which, when loaded into an apparatus, constitute the modules of any preceding claim 1 to 7.

9. A system, comprising:
an authentication server (106) configured to carry out authentication based on a user identity module for defining a user identification;
an authorization server (110) configured to check information on user's entitlement to services based on the user identification;
**characterized in that** the system comprises
a gateway server (100) configured to establish a secured connection, receive a payment message from a service server, forward the payment message to the user, receive a message comprising user's acceptance of a payment transaction, convey the user's acceptance of the payment to the service server, and add the user identification to a secured connection message or the message comprising the user's acceptance of a payment transaction; and
a service server configured to secure a payment transaction by means of a secure transfer protocol by using the user identification.

10. The system of claim 9, wherein the authentication server is an authentication protocol subscriber identity module (EAP-SIM) server, the gateway server is a packet data gateway (PDG) or a signaling gateway (SGW), and/or the authorization server is a remote authentication dial-in user service server.

11. The system of claims 9 to 10, further comprising:
a router configured to route service requests to each service server by a proxy server.

12. The system of claims 9 to 11, wherein the user identification is stored on a subscriber identity module and/or the user is operationally coupled to the gateway server via the secured connection via an unsecured network.

13. The system of claims 9 to 12, the system further comprising a universal serial bus device in which a subscriber identity module and a payment functionality have been integrated.

14. The system of claims 9 to 13, wherein the gateway server is further configured to determine the existence of a subscriber identity module including a payment functionality and to request the user for a credit card number and user identification.

15. The system of claims 9 to 14, wherein the gateway server is further configured to verify for a credit server that the user identification is related to the secured connection in question, and/or to add the user identification to the secured connection message or to the message comprising the user's acceptance of a payment transaction, and to convey the message by the gateway server to a credit server for securing a payment transaction.

16. The system of claims 9 to 15, wherein the service server is further configured to validate the accepted payment message and forward it to a credit server.

17. A gateway server, **characterized by** comprising:
means (302) for establishing a secured connection;
means (302, 304) for receiving a payment message from a service server;
means (302, 304) for forwarding the payment message to the user;
means (302, 304) for receiving a message comprising user's acceptance of a payment transaction;
means (302, 304) for adding a predetermined user identification to a secured connection message or the message comprising the user's acceptance of a payment transaction; and
means (302, 304) for conveying the user's acceptance of the payment transaction to the service server.

18. The gateway server of claim 17, wherein the gateway server is a packet data gateway (PDG) or a signaling gateway (SGW).

19. The gateway server of claim 17 or 18, the gateway server further comprising means (302, 304) for determining the existence of a subscriber identity module including a payment functionality and requesting the user for a credit card number and user identification.

20. The gateway of claims 17 to 19, the gateway server further comprising means (302, 304) for adding the user identification to a response message of the secured connection, the response message being intended to a credit server for securing a payment transaction.

21. The gateway of claims 17 to 20, the gateway server further comprising means (302, 304) for verifying for a credit server that the user identification is related to the secured connection in question.

22. The gateway server of claims 17 to 21, the gateway server further comprising means (302, 304) for informing the service server about the verification and the securing of a payment transaction by adding the user identification to a hypertext transfer protocol secure request used to secure the payment transaction.

## Patentansprüche

1. Verfahren umfassend:
Ausführen (202) von Authentifizierung basierend auf einem Benutzeridentitätsmodul zum Definieren einer Benutzeridentifizierung durch einen Authentifizierungsserver und ein Heimatortsregister;
Prüfen (204) von Informationen auf eine Berechtigung eines Benutzers für Dienste basierend auf der Benutzeridentifizierung durch einen Autorisierungsserver;
**gekennzeichnet durch**,
falls der Benutzer für gesicherte Verbindungsdienste (206) berechtigt ist,
Aufbauen (208) einer gesicherten Verbindungssitzung zwischen einem Benutzergerät und einem Gatewayserver durch den Gatewayserver;
Empfangen (210) einer Zahlungsnachricht von einem Dienstserver, Weiterleiten der Zahlungsnachricht an den Benutzer und Empfangen einer Nachricht, die Akzeptanz des Benutzers einer Zahlungstransaktion umfasst, durch den Gatewayserver;
Hinzufügen (212) der Benutzeridentifizierung zu einer gesicherten Verbindungsnachricht oder der Nachricht, die die Akzeptanz des Benutzers einer Zahlungstransaktion umfasst, und Übersenden der Akzeptanz des Benutzers der Zahlungstransaktion an den Dienstserver durch den Gatewayserver; und
Sichern (214) der Zahlungstransaktion durch Verwenden der Benutzeridentifizierung durch den Dienstserver mittels eines sicheren Übertragungsprotokolls oder durch den Gatewayserver mittels eines virtuellen privaten Netzwerks.

2. Verfahren nach Anspruch 1, wobei der Authentifizierungsserver ein Extensible Authentication Protocol Subscriber Identity Module (EAP-SIM) - Server ist, der Gatewayserver ein Paketdatengateway (PDG) oder ein Signalisierungsgateway (SGW) ist und/oder der Autorisierungsserver ein Fernauthentifizierungseinwahlbenutzerdienstserver ist.

3. Verfahren nach einem der Ansprüche 1 bis 2, wobei die Benutzeridentifizierung auf einem Teilnehmeridentitätsmodul gespeichert ist und/oder der Benutzer operativ mit dem Gatewayserver über die gesicherte Verbindungssitzung über ein ungesichertes Netzwerk gekoppelt ist.

4. Verfahren nach einem der Ansprüche 1 bis 3, wobei der Benutzer ein Universal Serial Bus - Gerät verwendet, in dem ein Teilnehmeridentitätsmodul und eine Zahlungsfunktionalität integriert worden sind.

5. Verfahren nach einem der Ansprüche 1 bis 4, weiter umfassend:
Bestimmen der Existenz eines Teilnehmeridentitätsmoduls, das eine Zahlungsfunktionalität enthält, durch den Gatewayserver oder einen Kreditserver;
Anfragen des Benutzers nach einer Kreditkartennummer und Benutzeridentifizierung.

6. Verfahren nach einem der Ansprüche 1 bis 5, weiter umfassend beim Sichern:
Verifizieren für einen Kreditserver, dass die Benutzeridentifizierung die in Frage stehende gesicherte Verbindung betrifft, durch den Gatewayserver und/oder Hinzufügen der Benutzeridentifizierung zu der gesicherten Verbindungsnachricht oder zu der Nachricht, die die Akzeptanz des Benutzers einer Zahlungstransaktion umfasst, und Übersenden der Nachricht durch den Gatewayserver an einen Kreditserver zum Sichern einer Zahlungstransaktion.

7. Verfahren nach einem der Ansprüche 1 bis 6, wobei der Dienstserver weiter dafür eingerichtet ist, die akzeptierte Zahlungsnachricht an einen Kreditserver weiterzuleiten.

8. Computerprogramm, das Programmanweisungen umfasst, die, wenn sie in eine Vorrichtung geladen werden, die Module nach einem der vorstehenden Ansprüche 1 bis 7 begründen.

9. System umfassend:
einen Authentifizierungsserver (106), der dafür eingerichtet ist, Authentifizierung basierend auf einem Benutzeridentitätsmodul zum Definieren einer Benutzeridentifizierung auszuführen;
einen Autorisierungsserver (110), der dafür eingerichtet ist, Informationen auf eine Berechtigung eines Benutzers für Dienste basierend auf der Benutzeridentifizierung zu prüfen;
**dadurch gekennzeichnet, dass** das System umfasst:
einen Gatewayserver (100), der dafür eingerichtet ist, eine gesicherte Verbindung aufzubauen, eine Zahlungsnachricht von einem Dienstserver zu empfangen, die Zahlungsnachricht an den Benutzer weiterzuleiten, eine Nachricht, die Akzeptanz des Benutzers einer Zahlungstransaktion umfasst, zu empfangen, die Akzeptanz des Benutzers der Zahlung an den Dienstserver zu übersenden und die Benutzeridentifizierung zu einer gesicherten Verbindungsnachricht oder der Nachricht, die die Akzeptanz des Benutzers einer Zahlungstransaktion umfasst, hinzuzufügen; und
einen Dienstserver, der dafür eingerichtet ist, eine Zahlungstransaktion mittels eines sicheren Übertragungsprotokolls durch Verwenden der Benutzeridentifizierung zu sichern.

10. System nach Anspruch 9, wobei der Authentifizierungsserver ein Extensible Authentication Protocol Subscriber Identity Module (EAP-SIM) - Server ist, der Gatewayserver ein Paketdatengateway (PDG) oder ein Signalisierungsgateway (SGW) ist und/oder der Autorisierungsserver ein Fernauthentifizierungseinwahlbenutzerdienstserver ist.

11. System nach einem der Ansprüche 9 bis 10, weiter umfassend:
einen Router, der dafür eingerichtet ist, Dienstanfragen an jeden Dienstserver durch einen Proxyserver zu routen.

12. System nach einem der Ansprüche 9 bis 11, wobei die Benutzeridentifizierung auf einem Teilnehmeridentitätsmodul gespeichert ist und/oder der Benutzer operativ mit dem Gatewayserver über die gesicherte Verbindung über ein ungesichertes Netzwerk gekoppelt ist.

13. System nach einem der Ansprüche 9 bis 12, wobei das System weiter ein Universal Serial Bus - Gerät umfasst, in dem ein Teilnehmeridentitätsmodul und eine Zahlungsfunktionalität integriert worden sind.

14. System nach einem der Ansprüche 9 bis 13, wobei der Gatewayserver weiter dafür eingerichtet ist, die Existenz eines Teilnehmeridentitätsmoduls, das eine Zahlungsfunktionalität enthält, zu bestimmen und den Benutzer nach einer Kreditkartennummer und Benutzeridentifizierung anzufragen.

15. System nach einem der Ansprüche 9 bis 14, wobei der Gatewayserver weiter dafür eingerichtet ist, für einen Kreditserver zu verifizieren, dass die Benutzeridentifizierung die in Frage stehende gesicherte Verbindung betrifft, und/oder die Benutzeridentifizierung zu der gesicherten Verbindungsnachricht oder zu der Nachricht, die die Akzeptanz des Benutzers einer Zahlungstransaktion umfasst, hinzuzufügen und die Nachricht durch den Gatewayserver an einen Kreditserver zum Sichern einer Zahlungstransaktion zu übersenden.

16. System nach einem der Ansprüche 9 bis 15, wobei der Dienstserver weiter dafür eingerichtet ist, die akzeptierte Zahlungsnachricht zu validieren und an einen Kreditserver weiterzuleiten.

17. Gatewayserver, **dadurch gekennzeichnet, dass** er umfasst:
Mittel (302) zum Aufbauen einer gesicherten Verbindung;
Mittel (302, 304) zum Empfangen einer Zahlungsnachricht von einem Dienstserver;
Mittel (302, 304) zum Weiterleiten der Zahlungsnachricht an den Benutzer;
Mittel (302, 304) zum Empfangen einer Nachricht, die Akzeptanz eines Benutzers einer Zahlungstransaktion umfasst;
Mittel (302, 304) zum Hinzufügen einer vorbestimmten Benutzeridentifizierung zu einer gesicherten Verbindungsnachricht oder der Nachricht, die Akzeptanz des Benutzers einer Zahlungstransaktion umfasst; und
Mittel (302, 304) zum Übersenden der Akzeptanz des Benutzers der Zahlungstransaktion an den Dienstserver.

18. Gatewayserver nach Anspruch 17, wobei der Gatewayserver ein Paketdatengateway (PDG) oder ein Signalisierungsgateway (SGW) ist.

19. Gatewayserver nach Anspruch 17 oder 18, wobei der Gatewayserver weiter Mittel (302, 304) zum Bestimmen der Existenz eines Teilnehmeridentitätsmoduls, das eine Zahlungsfunktionalität enthält, und Anfragen des Benutzers nach einer Kreditkartennummer und Benutzeridentifizierung umfasst.

20. Gateway nach einem der Ansprüche 17 bis 19, wobei der Gatewayserver weiter Mittel (302, 304) zum Hinzufügen der Benutzeridentifizierung zu einer Antwortnachricht der gesicherten Verbindung umfasst, wobei die Antwortnachricht an einen Kreditserver zum Sichern einer Zahlungstransaktion gerichtet ist.

21. Gateway nach einem der Ansprüche 17 bis 20, wobei der Gatewayserver weiter Mittel (302, 304) zum Verifizieren für einen Kreditserver umfasst, dass die Benutzeridentifizierung die in Frage stehende gesicherte Verbindung betrifft.

22. Gatewayserver nach einem der Ansprüche 17 bis 21, wobei der Gatewayserver weiter Mittel (302, 304) zum Informieren des Dienstservers über die Verifizierung und die Sicherung einer Zahlungstransaktion durch Hinzufügen der Benutzeridentifizierung zu einer Hypertext Transfer Protocol Secure - Anfrage, die verwendet wird, um die Zahlungstransaktion zu sichern, umfasst.

## Revendications

1. Procédé comprenant :
l'exécution (202) d'une authentification sur la base d'un module d'identité d'utilisateur pour définir une identification d'utilisateur par un serveur d'authentification et un registre de localisation d'origine ;
la vérification (204) d'informations sur une habilitation de l'utilisateur pour des services sur la base de l'identification d'utilisateur par un serveur d'autorisation ;
**caractérisé par**
si l'utilisateur est habilité pour des services de connexion sécurisée (206),
l'établissement (208) d'une session de connexion sécurisée entre un dispositif utilisateur et un serveur passerelle par le serveur passerelle ;
la réception (210) d'un message de paiement à partir d'un serveur de services, la retransmission du message de paiement à l'utilisateur et la réception d'un message comprenant une acceptation de l'utilisateur d'une transaction de paiement par le serveur passerelle ;
l'ajout (212) de l'identification d'utilisateur à un message de connexion sécurisée ou au message comprenant l'acceptation de l'utilisateur d'une transaction de paiement, et l'acheminement de l'acceptation de l'utilisateur de la transaction de paiement au serveur de services par le serveur passerelle ; et
la sécurisation (214) de la transaction de paiement en utilisant l'identification d'utilisateur par le serveur de services au moyen d'un protocole de transfert sécurisé ou par le serveur passerelle au moyen d'un réseau privé virtuel.

2. Procédé selon la revendication 1, dans lequel le serveur d'authentification est un serveur de module d'identité d'abonné de protocole d'authentification extensible (EAP-SIM), le serveur passerelle est une passerelle de données par paquets (PDG) ou une passerelle de signalisation (SGW) et/ou le serveur d'autorisation est un serveur de services d'utilisateur d'appel d'authentification à distance.

3. Procédé selon les revendications 1 à 2, dans lequel l'identification d'utilisateur est stockée sur un module d'identité d'abonné et/ou l'utilisateur est couplé en service au serveur passerelle par le biais de la session connexion sécurisée par le biais d'un réseau non sécurisé.

4. Procédé selon les revendications 1 à 3, dans lequel l'utilisateur utilise un dispositif de bus série universel dans lequel un module d'identité d'abonné et une fonctionnalité de paiement ont été intégrés.

5. Procédé selon les revendications 1 à 4, comprenant en outre :
la détermination de l'existence d'un module d'identité d'abonné comprenant une fonctionnalité de paiement par le serveur passerelle ou un serveur de crédit ;
la demande à l'utilisateur d'un numéro de carte de crédit et d'une identification d'utilisateur.

6. Procédé selon les revendications 1 à 5, comprenant en outre dans la sécurisation : la vérification pour un serveur de crédit du fait que l'identification d'utilisateur est relative à la connexion sécurisée en question par le serveur passerelle, et/ou l'ajout de l'identification d'utilisateur au message de connexion sécurisée ou au message comprenant l'acceptation de l'utilisateur pour une transaction de paiement, et l'acheminement du message par le serveur passerelle à un serveur de crédit pour sécuriser une transaction de paiement.

7. Procédé selon les revendications 1 à 6, dans lequel le serveur de services est configuré en outre pour retransmettre le message de paiement accepté à un serveur de crédit.

8. Programme informatique comprenant des instructions de programme qui, quand il est chargé dans un appareil, constitue les modules d'une quelconque revendication 1 à 7.

9. Système comprenant :
un serveur d'authentification (106) configuré pour exécuter une authentification sur la base d'un module d'identité d'abonné pour définir une identification d'utilisateur ;
un serveur d'autorisation (110) configuré pour vérifier des informations sur une habilitation de l'utilisateur pour des services sur la base de l'identification d'utilisateur ;
**caractérisé en ce que** le système comprend
un serveur passerelle (100) configuré pour établir une connexion sécurisée, recevoir un message de paiement à partir d'un serveur de services, retransmettre le message de paiement à l'utilisateur, recevoir un message comprenant une acceptation de l'utilisateur d'une transaction de paiement, acheminer l'acceptation de l'utilisateur de la transaction de paiement au serveur de services, et ajouter l'identification d'utilisateur à un message de connexion sécurisée ou au message comprenant l'acceptation de l'utilisateur d'une transaction de paiement ; et
un serveur de services configuré pour sécuriser une transaction de paiement au moyen d'un protocole de transfert sécurisé en utilisant l'identification d'utilisateur.

10. Système selon la revendication 9, dans lequel le serveur d'authentification est un serveur de module d'identité d'abonné de protocole d'authentification (EAP-SIM), le serveur passerelle est une passerelle de données par paquets (PDG) ou une passerelle de signalisation (SGW) et/ou le serveur d'autorisation est un serveur de services d'utilisateur d'appel d'authentification à distance.

11. Système selon les revendications 9 à 10, comprenant en outre :
un routeur configuré pour acheminer des demandes de service à chaque serveur de services par un serveur proxy.

12. Système selon les revendications 9 à 11, dans lequel l'identification d'utilisateur est stockée sur un module d'identité d'abonné et/ou l'utilisateur est couplé en service au serveur passerelle par le biais de la connexion sécurisée par le biais d'un réseau non sécurisé.

13. Système selon les revendications 9 à 12, le système comprenant en outre un dispositif de bus série universel dans lequel un module d'identité d'abonné et une fonctionnalité de paiement ont été intégrés.

14. Système selon les revendications 9 à 13, dans lequel le serveur passerelle est configuré en outre pour déterminer l'existence d'un module d'identité d'abonné comprenant une fonctionnalité de paiement et pour demander à l'utilisateur un numéro de carte de crédit et une identification d'utilisateur.

15. Système selon les revendications 9 à 14, dans lequel le serveur passerelle est configuré en outre pour vérifier pour un serveur de crédit le fait que l'identification d'utilisateur est relative à la connexion sécurisée en question, et/ou ajouter l'identification d'utilisateur au message de connexion sécurisée ou au message comprenant l'acceptation de l'utilisateur pour une transaction de paiement, et acheminer le message par le serveur passerelle à un serveur de crédit pour sécuriser une transaction de paiement.

16. Système selon les revendications 9 à 15, dans lequel le serveur de service est configuré en outre pour valider le message de paiement accepté et le retransmettre à un serveur de crédit.

17. Serveur passerelle, **caractérisé en ce qu'**il comprend :
des moyens (302) pour établir une connexion sécurisée ;
des moyens (302, 304) pour recevoir un message de paiement à partir d'un serveur de services ;
des moyens (302, 304) pour retransmettre le message de paiement à l'utilisateur ;
des moyens (302, 304) pour recevoir un message comprenant une acceptation de l'utilisateur d'une transaction de paiement ;
des moyens (302, 304) pour ajouter l'identification d'utilisateur prédéterminée à un message de connexion sécurisée ou au message comprenant l'acceptation de l'utilisateur d'une transaction de paiement ; et
des moyens (302, 304) pour acheminer l'acceptation de l'utilisateur de la transaction de paiement au serveur de services.

18. Serveur passerelle selon la revendication 17, dans lequel le serveur passerelle est une passerelle de données par paquets (PDG) ou une passerelle de signalisation (SGW).

19. Serveur passerelle selon la revendication 17 ou 18, le serveur passerelle comprenant en outre des moyens (302, 304) pour déterminer l'existence d'un module d'identité d'abonné comprenant une fonctionnalité de paiement et demander à l'utilisateur un numéro de carte de crédit et une identification d'utilisateur.

20. Passerelle selon les revendications 17 à 19, le serveur passerelle comprenant en outre des moyens (302, 304) pour ajouter l'identification d'utilisateur à un message de réponse de la connexion sécurisée, le message de réponse étant destiné à un serveur de crédit pour sécuriser une transaction de paiement.

21. Passerelle selon la revendication 17 à 20, le serveur passerelle comprenant en outre des moyens (302, 304) pour vérifier pour un serveur de crédit le fait que l'identification d'utilisateur est relative à la connexion sécurisée en question.

22. Serveur passerelle selon la revendication 17 à 21, le serveur passerelle comprenant en outre des moyens (302, 304) pour informer le serveur de services sur la vérification et la sécurisation d'une transaction de paiement en ajoutant l'identification d'utilisateur à une demande de sécurisation de protocole de transfert hypertexte utilisée pour sécuriser la transaction de paiement.
